# FASCICULE DE BREVET EUROPEEN

(11) **EP 2 785 665 B1**
(45) Date de publication et mention de la délivrance du brevet: **22.11.2017**
(21) Numéro de dépôt: 12806551.3
(22) Date de dépôt: 22.11.2012
(51) Int. Cl.: C04B 35/573, C04B 35/80, C04B 35/628, C04B 41/00, C04B 41/85, C04B 41/50

(54) **PROCEDE DE FABRICATION DE PIECE EN MATERIAU CMC**
HERSTELLUNGSVERFAHREN FÜR EIN TEIL AUS EINEM CMC-MATERIAL
CMC MATERIAL PART MANUFACTURE METHOD

(30) Priorité: 30.11.2011 FR 1160941
(43) Date de publication de la demande: 08.10.2014
(73) Titulaire: Safran Ceramics, 33185 Le Haillan (FR)
(72) Inventeur: BOUILLON, Eric, F-33185 Le Haillan (FR); PHILIPPE, Eric, F-33700 Mérignac (FR); LAFOND, André, F-33160 Saint Medard en Jalles (FR); LAMOUROUX, Franck, F-33320 Le Taillan Medoc (FR)
(74) Mandataire: Laïk, Eric
(86) Numéro de dépôt international: PCT/FR2012/052700
(87) Numéro de publication internationale: WO 2013/079853

(56) Documents cités:
- EP-A1- 0 835 853
- EP-A2- 2 210 868
- FR-A1- 2 939 129

## Description

### Arrière-plan de l'invention

L'invention concerne la réalisation de pièces en matériau composite à matrice céramique ou au moins partiellement en céramique, désigné ci-après par matériau CMC.

Un domaine d'application de l'invention est la réalisation de pièces destinées à être exposées en service à des températures élevées en atmosphère oxydante, notamment dans des domaines aéronautique et spatial, en particulier des pièces de parties chaudes de turbomachines aéronautiques, étant noté que l'invention peut être appliquée dans d'autres domaines, par exemple le domaine des turbines à gaz industrielles.

Les matériaux CMC possèdent des bonnes propriétés thermostructurales, c'est-à-dire des propriétés mécaniques élevées qui les rendent aptes à constituer des pièces structurales et la capacité de conserver ces propriétés à hautes températures.

L'utilisation de matériaux CMC à la place de matériaux métalliques pour des pièces exposées en service à des températures élevées a donc été préconisée, d'autant que les matériaux CMC présentent une masse volumique sensiblement plus faible que les matériaux métalliques auxquels ils se substituent.

Un premier procédé bien connu pour la fabrication de pièces en matériau CMC comprend la réalisation d'une préforme fibreuse à partir d'une texture fibreuse tissée, la préforme étant consolidée et densifiée par une matrice céramique par infiltration chimique en phase gazeuse, ou CVI ("Chemical Vapor Infiltration"). On pourra se référer par exemple aux documents WO 2010/061140, WO 2010/116066 et WO 2011/080443 qui concernent la fabrication de pièces de turbomachines aéronautiques en matériau CMC.

Un deuxième procédé bien connu consiste à réaliser une préforme à partir de strates fibreuses dont les fibres à base de carbure de silicium ont été revêtues par CVI d'une couche de nitrure de bore BN surmontée d'une couche de carbone ou de carbure, notamment de carbure de silicium SiC. Les strates fibreuses sont pré-imprégnées par une composition contenant une poudre de carbone ou de céramique et un liant organique ou, en variante, une imprégnation par une telle composition est réalisée après réalisation de la préforme. Après élimination du liant, une infiltration de silicium en fusion éventuellement enrichi de bore est réalisée, un tel processus de densification étant connu sous la désignation processus MI ("Melt Infiltration"). On pourra se référer par exemple aux documents US 4 889 686, US 4 944 904 ou US 5 015 540. De façon bien connue, le matériau d'interphase BN revêtant les fibres remplit une fonction de défragilisation du matériau composite tout en isolant les fibres du silicium en fusion lors du processus MI.

Le processus de densification par CVI permet de réaliser des phases de matrice d'épaisseur uniforme et de composition contrôlées, notamment des phases de matrice en des matériaux ayant des fonctions spécifiques de déviation de fissures ou d'autocicatrisation, conférant une durée de vie élevée à des températures élevées et sous atmosphère oxydante. Par matériau autocicatrisant, on entend ici un matériau formant, en présence d'oxygène, une composition vitreuse capable, par passage à l'état pâteux ou fluide dans un certain domaine de températures, de cicatriser des fissures apparues au sein du matériau. Des exemples de matériaux autocicatrisants sont un système ternaire Si-B-C ou du carbure de bore pouvant former un verre de type borosilicate. Toutefois, les processus de densification par CVI sont relativement longs et coûteux.

A l'inverse, la densification par processus MI ne permet pas de maîtriser la formation de phases de matrice d'épaisseur et de composition contrôlées, mais est bien plus rapide et aisée à mettre en oeuvre que la densification par CVI, et peut, de ce point de vue, être attractive. Toutefois, en présence de fissuration, les pièces obtenues par le deuxième procédé ci-dessus présentent une durée de vie réduite sous atmosphère oxydante à partir d'environ 800°C du fait de l'oxydation du matériau BN du revêtement d'interphase en B₂O₃ lequel, en présence d'humidité, forme un oxyde volatile conduisant à l'appauvrissement en matériau BN, donc à la disparition progressive de la fonction de défragilisation. Or, les matériaux CMC sont quasi-inévitablement sujets à fissuration en raison des cyclages thermiques auxquels ils sont soumis en service. En outre, la formation de BN par CVI est complexe, et fait appel à des précurseurs gazeux de type NH₃ et BCl₃ ou BF₃, ce qui requiert une installation complexe en particulier pour le traitement des effluents à un stade industriel. Par ailleurs, le dépôt d'une couche SiC sur le matériau BN du revêtement d'interphase peut n'avoir qu'une efficacité limitée pour protéger ce revêtement lors de l'infiltration par du silicium fondu, un dépôt SiC obtenu par CVI ayant généralement une structure colonnaire dans laquelle le silicium en fusion peut s'infiltrer.

On connaît par ailleurs EP 0 835 853 qui divulgue un élément de friction en matériau composite carbone/carbone-carbure de silicium et FR 2 939 129 qui divulgue une aube de turbomachine en matériau composite.

### Objet et résumé de l'invention

L'invention a notamment pour but de fournir un procédé ne présentant pas les inconvénients des procédés connus précités.

Ce but est atteint grâce à un procédé selon la revendication 1.

L'interphase en PyC ou BC a ici une fonction classique de défragilisation du matériau composite du fait de la structure en feuillets du PyC ou de BC qui favorise la déviation de fissures parvenant à l'interphase après s'être propagées dans la matrice, empêchant ou retardant la rupture de fibres par de telles fissures.

Par carbone dopé au bore, ou BC, on entend une composition contenant 5%at B à 20%at B, le reste étant du carbone. Une telle composition présente une structure turbostratique, c'est-à-dire une désorientation entre feuillets empilés, qui est favorable à la fonction de défragilisation et est difficile à obtenir avec du BN.

Le procédé selon l'invention est notamment remarquable en ce qu'il prévoit la réalisation d'une phase de matrice séquencée, avec des couches de matériau autocicatrisant alternant avec une ou plusieurs couches de matériau déviateur de fissures PyC ou BC, cette phase de matrice séquencée étant interposée entre le revêtement d'interphase et la phase de matrice obtenue par processus MI.

La phase de matrice obtenue par processus MI étant sujette à fissuration, de façon similaire à une céramique monolithique, la phase de matrice séquencée, avec la présence de matériau autocicatrisant et de matériau déviateur de fissures, s'oppose efficacement à la propagation de fissures jusqu'au revêtement d'interphase, donc à l'exposition de ce dernier à un environnement oxydant. La fonction de défragilisation apportée par le revêtement d'interphase est ainsi préservée en dépit du caractère oxydable du revêtement d'interphase PyC ou BC. La formation d'un revêtement d'interphase BN, avec les difficultés mentionnées plus haut, n'est pas requise et une tenue en atmosphère oxydante à température élevée, notamment au-delà de 800°C est assurée par la présence de la phase de matrice séquencée. De plus, la phase de matrice séquencée contribue aussi à la protection du revêtement d'interphase vis-à-vis du silicium en fusion ou de la composition liquide à base de silicium lors du processus MI.

Avantageusement, le matériau de chaque couche de matériau autocicatrisant de la première phase de matrice peut être choisi parmi un système ternaire Si-B-C et du carbure de bore, de préférence amorphe.

L'épaisseur totale de l'ensemble des couches de matériau autocicatrisant et de la ou des couches de PyC ou BC dans la première phase de matrice peut être comprise entre 500 nm et 30 µm.

Selon un mode de mise en oeuvre du procédé, la première phase de matrice est complétée avec une couche de matériau céramique ne contenant pas de bore qui est formée sur la dernière couche de matériau autocicatrisant.

Ladite couche de matériau céramique ne contenant pas de bore peut avoir une épaisseur au moins égale à 500 nanomètres.

Ladite couche de matériau céramique ne contenant pas de bore peut être notamment en carbure de silicium (SiC) ou en nitrure de silicium (Si₃N₄).

Selon un mode de réalisation, la réalisation de la préforme fibreuse consolidée comprend la formation de la préforme fibreuse par conformation de la structure fibreuse et la formation du revêtement d'interphase sur les fibres de la préforme par infiltration chimique en phase gazeuse, puis la formation de la première phase de matrice, le revêtement d'interphase et la première phase de matrice étant formés avec une épaisseur totale suffisante pour consolider la préforme. Une telle épaisseur suffisante pour consolider la préforme est par exemple au moins égale à 500 nanomètres.

Selon un autre mode de réalisation, la formation de l'interphase sur les fibres de la préforme comprend une première étape de formation d'une première couche d'interphase et une deuxième étape de formation d'une deuxième couche d'interphase, la première et la deuxième étapes étant séparées par une étape de consolidation de la préforme fibreuse, la consolidation de la préforme comprenant une imprégnation par une composition liquide contenant une résine précurseur de carbone ou céramique, la conformation de la préforme dans l'outillage de conformation, la polymérisation de la résine et transformation de la résine en carbone ou céramique, la préforme étant maintenue en forme dans l'outillage de conformation au moins jusqu'à polymérisation de la résine.

La première couche d'interphase peut être formée par infiltration chimique en phase gazeuse avec une épaisseur au plus égale à 300 nm.

Selon un mode de réalisation, la préforme fibreuse est formée à partir d'une structure fibreuse réalisée en une seule pièce par tissage tridimensionnel ou multicouches.

La dispersion de poudre de carbone et/ou de céramique au sein de la préforme fibreuse consolidée peut être réalisée par imprégnation par une barbotine aqueuse contenant la poudre en suspension dans de l'eau.

La dispersion de la poudre de carbone et/ou de céramique au sein de la préforme fibreuse consolidée peut aussi être réalisée au moyen d'une composition liquide contenant la poudre de carbone et/ou de céramique dispersée dans une résine précurseur de carbone ou de céramique.

La composition liquide formée majoritairement de silicium peut comprendre en outre au moins un élément parmi le bore B, le titane Ti et le molybdène Mo.

### Brève description des dessins

L'invention sera mieux comprise à la lecture de la description faite ci-après, à titre indicatif mais non limitatif, en référence aux dessins annexés sur lesquels :
- la figure 1 montre des étapes successives d'un procédé de fabrication de pièce en matériau CMC selon un premier mode de réalisation de l'invention ; et
- la figure 2 montre des étapes successives d'un procédé de fabrication de pièce en matériau CMC selon un deuxième mode de réalisation de l'invention.

### Description détaillée de modes de réalisation

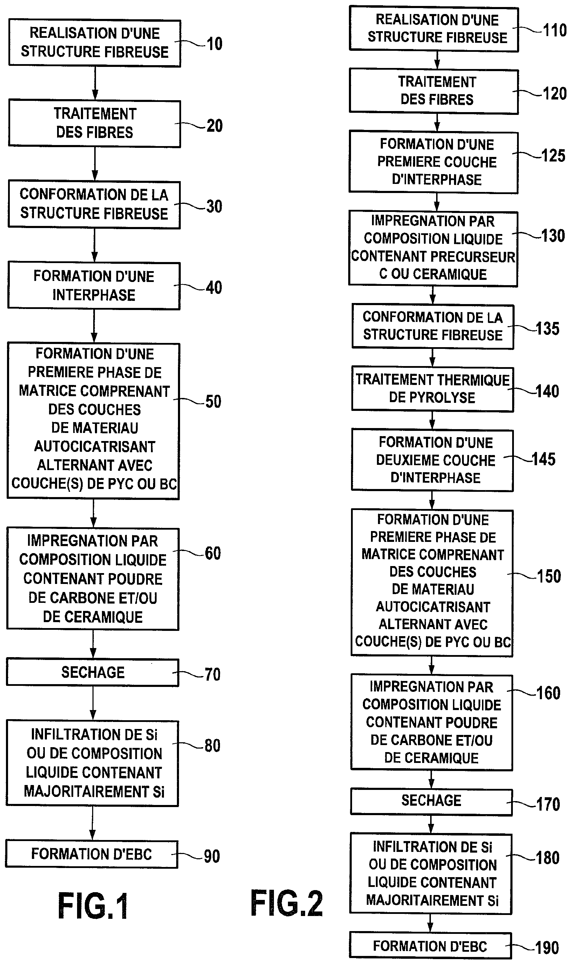

Un premier mode de réalisation de l'invention sera décrit en référence à la figure 1.

Une première étape 10 consiste à réaliser une structure fibreuse à partir de laquelle une préforme fibreuse ayant une forme voisine de celle d'une pièce à fabriquer sera réalisée. Une telle structure fibreuse peut être obtenue par tissage multicouches ou tridimensionnel à partir de fils ou câbles. Il est possible aussi de partir de textures fibreuses bidimensionnelles telles que des tissus ou des nappes de fils ou câbles pour former des strates qui seront ensuite drapées sur une forme et éventuellement liées entre elles par exemple par couture ou implantation de fils.

Les fibres constitutives de la structure fibreuse sont de préférence des fibres en céramique, par exemple des fibres formées essentiellement de carbure de silicium SiC (désignées ci-après fibres SiC) ou de nitrure de silicium Si₃N₄. On peut notamment utiliser des fibres SiC commercialisées sous la dénomination "Hi-Nicalon(S)" par la société japonaise Nippon Carbon. Il est possible en variante d'utiliser des fibres de carbone.

De façon connue, dans le cas de fibres en céramique, notamment de fibres SiC, un traitement de surface de celles-ci préalablement à la formation d'un revêtement d'interphase est de préférence réalisé (étape 20) pour éliminer l'ensimage et une couche superficielle d'oxyde tel que de la silice SiO₂ présents sur les fibres.

L'étape 30 consiste à mettre en forme la structure fibreuse au moyen d'un outillage de conformation pour obtenir une préforme ayant une forme voisine de celle de la pièce à fabriquer.

La préforme étant maintenue dans son outillage de conformation, par exemple en graphite, une interphase de défragilisation est formée par CVI sur les fibres de la préforme, cette interphase étant formée par au moins une couche de carbone pyrolytique ou PyC ou de carbone dopé au bore, ou BC (avec 5%at B à 20%at B, le reste étant C) (étape 40). L'épaisseur de l'interphase de PyC ou BC est de préférence de une à plusieurs dizaines de nm et est comprise entre 10 nm et 1000 nm.

Ensuite (étape 50), une première phase de matrice est formée, comprenant plusieurs couches de matériau autocicatrisant obtenues par CVI et alternant avec une ou plusieurs couches de PyC ou de BC obtenues par CVI, la première et la dernière couche de la première phase de matrice étant en matériau autocicatrisant. On peut choisir, pour chaque couche de matériau autocicatrisant, un matériau contenant du bore, par exemple un système ternaire amorphe Si-B-C ou du carbure de bore de préférence amorphe capable de former, en présence d'oxygène, un verre de type borosilicate ayant des propriétés autocicatrisantes. L'épaisseur totale des couches de matériau autocicatrisant et de la ou des couches de PyC ou BC est de plusieurs centaines de nm, de préférence comprise entre 500 nm et 30 µm. Les matériaux cicatrisants des différentes couches de matériau cicatrisant peuvent être les mêmes ou être différents.

La première phase de matrice peut être complétée par une couche de matériau céramique ne contenant pas de bore, par exemple SiC ou Si₃N₄, formée sur la dernière couche de matériau autocicatrisant pour constituer une barrière de réaction entre le matériau autocicatrisant et le silicium fondu ou la composition liquide à base de silicium introduite ultérieurement. L'épaisseur de cette couche de matériau céramique formant barrière de réaction est de préférence de plusieurs centaines de nm, par exemple au moins égale à 500 nm, typiquement de un à plusieurs microns. Des matériaux céramiques ne contenant pas de bore et autres que SiC ou Si₃N₄ peuvent être utilisés pour former barrière de réaction, par exemple des carbures réfractaires tels que ZrC ou HfC.

L'épaisseur totale de l'interphase et de la première phase de matrice, comprenant une couche céramique éventuelle formant barrière de réaction, est choisie suffisante pour consolider la préforme fibreuse, c'est-à-dire pour lier entre elles les fibres de la préforme de façon suffisante pour que la préforme puisse être manipulée en conservant sa forme sans assistance d'outillage de maintien. Cette épaisseur totale est de préférence d'au moins 500 nm. Après consolidation, la préforme reste poreuse, la porosité initiale n'étant par exemple comblée que pour une partie minoritaire par l'interphase et la première phase de matrice.

Des dépôts de PyC, BC, B₄C, Si-B-C ou SiC peuvent être réalisés par CVI, de façon en soi bien connue. On pourra notamment se référer aux documents US 5 246 736, US 5 965 266 et US 6 068 930.

On notera que l'étape de formation de l'interphase par CVI pourra être réalisée sur les fibres de la structure fibreuse avant conformation de celle-ci dans la mesure où l'interphase est suffisamment mince pour ne pas affecter la capacité souhaitée de déformation de la structure fibreuse.

La préforme consolidée, partiellement densifiée et poreuse, est retirée de son outillage de conformation pour poursuivre la densification par un processus de type MI comprenant l'introduction de charges solides et l'infiltration de métal fondu.

Une imprégnation de la préforme consolidée par une composition liquide contenant une poudre de carbone et/ou de céramique est réalisée (étape 60).

La composition d'imprégnation peut être une barbotine contenant la poudre en suspension dans un véhicule liquide, par exemple de l'eau. La poudre peut être retenue dans la préforme par filtration ou par décantation éventuellement avec l'aide d'une dépression. La poudre est constituée de carbone et/ou de céramique, notamment de carbure, nitrure ou siliciure, par exemple de carbure de silicium SiC. On utilise de préférence une poudre formée de particules de dimension moyenne inférieure à 5 µm.

Après séchage, (étape 70), on obtient une préforme consolidée dans la porosité de laquelle une poudre de carbone et/ou céramique est dispersée.

On peut aussi réaliser une imprégnation de la préforme consolidée par une composition liquide contenant de la poudre de carbone et/ou de céramique dispersée dans une résine organique de type résine carbonée ou résine précurseur de céramique, par exemple résine organosiliciée, éventuellement additionnée d'un solvant de la résine. L'imprégnation peut être réalisée par un procédé connu de type infusion, injection ou RTM ("Resin Transfer Molding"). Après polymérisation de la résine, un traitement thermique de pyrolyse est effectué transformant la résine en résidu carbone ou céramique.

La densification est poursuivie (étape 80) par infiltration de silicium en fusion Si ou d'une composition liquide contenant majoritairement du silicium en fusion, les éléments additionnels pouvant être choisis par exemple parmi le bore B, le titane Ti, et le molybdène Mo. L'infiltration est réalisée sous atmosphère non oxydante, de préférence sous pression réduite.

Dans le cas où la poudre introduite préalablement est en carbone, et dans le cas de présence de résidu carbone d'une résine utilisée pour l'imprégnation de la préforme consolidée, le silicium réagit avec celui-ci pour former du carbure de silicium SiC. Dans le cas où la poudre introduite préalablement est en céramique, notamment carbure, nitrure ou siliciure, et dans le cas de présence de résidu céramique d'une résine utilisée pour l'imprégnation de la préforme consolidée, on obtient une matrice partiellement en silicium liant la poudre céramique. Dans tous les cas, la matrice totale finalement obtenue est au moins partiellement en céramique, de préférence majoritairement en céramique.

La pièce obtenue peut être munie d'un revêtement formant barrière environnementale ou EBC ("Environmental Barrier Coating") de façon connue en soi (étape 90). Des compositions d'EBC, comprenant notamment une couche d'alumino-silicate d'élément(s) alcalin(s) ou alcalino-terreux, telle qu'une couche de BSAS ("Baryum Strontium Aluminum Silicate") sont bien connues en soi. On pourra se référer entre autres aux documents US 2009/169873, US 2010/003504 et WO 2010/072978.

Un autre mode de réalisation d'un procédé selon l'invention sera maintenant décrit en référence à la figure 2.

Le procédé de la figure 2 se distingue de celui de la figure 1 en particulier par la façon dont est réalisée la consolidation de la préforme fibreuse.

Les étapes 110 de réalisation d'une structure fibreuse et 120 de traitement de la structure fibreuse dans le cas de fibres en céramique sont similaires aux étapes 10 et 20 du procédé de la figure 1.

Une étape 125 de réalisation par CVI d'une première couche d'interphase PyC ou BC intervient après l'étape 120 et avant conformation de la structure fibreuse. L'épaisseur de la couche d'interphase PyC ou BC est choisie suffisamment faible pour ne pas affecter la capacité de déformation de la structure fibreuse, c'est-à-dire par exemple au plus égale à 300 nm.

Une consolidation par voie liquide est ensuite réalisée. A cet effet, la structure fibreuse munie de la couche PyC ou BC du revêtement d'interphase est imprégnée (étape 130) par une composition liquide contenant un précurseur de carbone ou de céramique et la structure fibreuse est conformée (étape 135) dans un outillage pour obtenir une préforme de forme désirée. Le précurseur de carbone ou de céramique peut être sous forme d'une résine éventuellement diluée dans un solvant. Après élimination du solvant éventuel et polymérisation de la résine, un traitement thermique est réalisé (étape 140) pour obtenir une phase solide consolidante de carbone ou de céramique sous forme de grains de résidus de pyrolyse. La structure fibreuse est maintenue dans l'outillage de conformation au moins jusqu'à polymérisation de la résine. Une résine précurseur de carbone est par exemple une résine époxy, furanique ou phénolique, tandis qu'une résine précurseur de céramique est par exemple une résine polysilane, polysiloxane, polysilazane ou silicone.

L'imprégnation de la structure fibreuse par la composition liquide de consolidation peut aussi être réalisée après conformation de la structure fibreuse dans un outillage, par infusion, par injection ou par un processus de type RTM.

La réalisation de l'interphase est ensuite poursuivie par formation d'une deuxième couche d'interphase PyC ou BC (étape 145) recouvrant la première couche d'interphase et les grains discontinus de résidu de pyrolyse de la résine de consolidation. L'épaisseur de la deuxième couche d'interphase peut être au moins égale à 100 nm. La formation d'une interphase en deux étapes séparées par une étape de consolidation par voie liquide est décrite dans le document US 2010/015428.

Ensuite, une première phase de matrice est formée par CVI (étape 150), l'étape 150 étant similaire à l'étape 50 du procédé de la figure 1. Comme décrit précédemment, la première phase de matrice est formée de plusieurs couches de matériau autocicatrisant obtenues par CVI et alternant avec une ou plusieurs couches de PyC ou de BC obtenues par CVI. Comme indiqué plus haut, la couche externe de matériau autocicatrisant de la première phase de matrice peut être surmontée d'une couche formant barrière de réaction en matériau céramique ne contenant pas de bore, par exemple SiC ou Si₃N₄. L'épaisseur totale des couches de matériau autocicatrisant et de la ou des couches de PyC ou BC est de plusieurs centaines de nm, de préférence au moins égale à 500 nm, par exemple comprise entre 1 µm et 30 µm. L'épaisseur de la couche céramique éventuelle formant barrière de réaction est de préférence de plusieurs centaines de nm, par exemple au moins égale à 500 nm, typiquement de 1 à plusieurs microns.

Les étapes suivantes d'imprégnation par une barbotine aqueuse (étape 160) ou une composition liquide contenant de la poudre de carbone ou céramique dispersée dans une résine précurseur de carbone ou de céramique, de séchage (étape 170), d'infiltration de silicium en fusion ou de composition liquide contenant majoritairement du silicium en fusion (étape 180) et de formation éventuelle d'EBC (étape 190) sont similaires aux étapes 60, 70, 80 et 90 du procédé de la figure 1.

## Revendications

1. Procédé de fabrication de pièce en matériau composite à matrice au moins partiellement en céramique, comprenant les étapes de :
- réalisation d'une structure fibreuse, les fibres de la structure fibreuse étant des fibres de carbone ou de céramique,
- formation sur les fibres d'un revêtement d'interphase formé par au moins une couche de carbone pyrolytique (PyC) ou de carbone dopé au bore (BC), l'épaisseur du revêtement d'interphase étant comprise entre 10 nm et 1000 nm,
- mise en forme de la structure fibreuse au moyen d'un outillage de conformation pour obtenir une préforme de la pièce à fabriquer,
- consolidation de la préforme fibreuse dans l'outillage de conformation,
- formation sur l'interphase d'une première phase de matrice comprenant plusieurs couches de matériau autocicatrisant alternant avec une ou plusieurs couches d'un matériau choisi parmi du carbone pyrolytique (PyC) et du carbone dopé au bore (BC), les couches de matériau autocicatrisant et les couches de PyC ou BC étant obtenues par CVI, pour obtenir une préforme consolidée partiellement densifiée, et
- poursuite de la densification, après retrait de la préforme de l'outillage de conformation, par dispersion au sein de la préforme consolidée partiellement densifiée de poudre de carbone et/ou de céramique et infiltration de silicium en fusion ou d'une composition liquide formée majoritairement de silicium.

2. Procédé selon la revendication 1, dans lequel le matériau de chaque couche de matériau autocicatrisant de la première phase de matrice est choisi parmi un système ternaire Si-B-C et du carbure de bore.

3. Procédé selon l'une quelconque des revendications 1 et 2, dans lequel l'épaisseur totale des couches de matériau autocicatrisant et de la ou des couches de PyC ou BC dans la première phase de matrice est comprise entre 500 nm et 30 µm.

4. Procédé selon l'une quelconque des revendications 1 à 3, dans lequel la première phase de matrice est complétée avec au moins une couche de matériau céramique ne contenant pas de bore qui est formée sur la dernière couche de matériau autocicatrisant.

5. Procédé selon la revendication 4, dans lequel ladite couche de matériau céramique ne contenant pas de bore a une épaisseur au moins égale à 500 nanomètres.

6. Procédé selon l'une quelconque des revendications 4 et 5, dans lequel ladite couche de matériau céramique ne contenant pas de bore est en carbure de silicium (SiC) ou nitrure de silicium (Si₃N₄).

7. Procédé selon l'une quelconque des revendications 1 à 6, dans lequel la réalisation de la préforme fibreuse consolidée comprend la formation de la préforme fibreuse par conformation de la structure fibreuse et la formation du revêtement d'interphase sur les fibres de la préforme par infiltration chimique en phase gazeuse, puis la formation de la première phase de matrice, le revêtement d'interphase et la première phase de matrice étant formés avec une épaisseur totale suffisante pour consolider la préforme.

8. Procédé selon l'une quelconque des revendications 1 à 6, dans lequel la formation de l'interphase sur les fibres de la préforme comprend une première étape de formation d'une première couche d'interphase et une deuxième étape de formation d'une deuxième couche d'interphase, la première et la deuxième étapes étant séparées par une étape de consolidation de la préforme, la consolidation de la préforme comprenant une imprégnation par une composition liquide contenant une résine précurseur de carbone ou céramique, la conformation de la préforme dans un outillage, la polymérisation de la résine et transformation de la résine en carbone ou céramique, la préforme étant maintenue en forme dans l'outillage de conformation au moins jusqu'à polymérisation de la résine.

9. Procédé selon l'une quelconque des revendications 1 à 8, dans lequel la préforme fibreuse est formée à partir d'une structure fibreuse réalisée en une seule pièce par tissage tridimensionnel ou multicouches.

10. Procédé selon l'une quelconque des revendications 1 à 9, dans lequel la dispersion du poudre de carbone et/ou de céramique au sein de la préforme fibreuse consolidée est réalisée par imprégnation par une barbotine contenant la poudre en suspension dans un véhicule liquide.

11. Procédé selon l'une quelconque des revendications 1 à 9, dans lequel la dispersion de la poudre de carbone et/ou de céramique au sein de la préforme fibreuse consolidée est réalisée au moyen d'une composition liquide contenant la poudre de carbone et/ou de céramique dispersée dans une résine précurseur de carbone ou de céramique.

12. Procédé selon l'une quelconque des revendications 1 à 11, dans lequel la composition liquide formée majoritairement de silicium comprend en outre au moins un élément parmi le bore B, le titane Ti et le molybdène Mo.

## Patentansprüche

1. Herstellungsverfahren für ein Teil aus einem Verbundmaterial mit mindestens teilweise keramischer Matrix, umfassend die Schritte:
- Herstellen einer Faserstruktur, wobei die Fasern der Faserstruktur Kohle- oder Keramikfasern sind,
- Bilden einer Interphasenbeschichtung auf den Fasern, die durch mindestens eine Schicht aus pyrolytischem Kohlenstoff (PyC) oder bordotiertem Kohlenstoff (BC) gebildet ist, wobei die Dicke der Interphasenbeschichtung zwischen 10 nm und 1000 nm liegt,
- Formen der Faserstruktur mittels eines Formgebungswerkzeugs, um eine Vorform des herzustellenden Teils zu erhalten,
- Verfestigen der faserstoffhaltigen Vorform im Formgebungswerkzeug,
- Bilden einer ersten Matrixphase auf der Interphase, die eine Vielzahl von Schichten aus selbstheilendem Material abwechselnd mit einer oder mehreren Schichten aus einem Material, ausgewählt aus pyrolytischem Kohlenstoff (PyC) und bordotiertem Kohlenstoff (BC), aufweist, wobei die Schichten aus selbstheilendem Material und die Schichten aus PyC oder BC durch CVI erhalten werden, um eine verfestigte Vorform zu erhalten, die teilweise verdichtet ist, und
- weiteres Verfestigen nach Entfernen der Vorform aus dem Formgebungswerkzeug durch Dispersion von Kohlenstoff- und/oder Keramikpulver innerhalb der teilweise verdichteten, verfestigten Vorform und Infiltration von geschmolzenem Silizium oder einer flüssigen Zusammensetzung, die hauptsächlich aus Silicium besteht.

2. Verfahren nach Anspruch 1, wobei das Material jeder Schicht des selbstheilenden Materials der ersten Matrixphase aus einem ternären Si-B-C-System und Borcarbid ausgewählt wird.

3. Verfahren nach einem der Ansprüche 1 und 2, wobei die Gesamtdicke der selbstheilenden Materialschichten und der PyC- oder BC-Schicht(en) in der ersten Matrixphase zwischen 500 nm und 30 µm liegt.

4. Verfahren nach einem der Ansprüche 1 bis 3, wobei die erste Matrixphase mit mindestens einer Schicht aus borfreiem Keramikmaterial abgeschlossen wird, die auf der letzten Schicht aus selbstheilendem Material gebildet wird.

5. Verfahren nach Anspruch 4, wobei die Schicht aus borfreiem Keramikmaterial eine Dicke von mindestens 500 Nanometern aufweist.

6. Verfahren gemäß einem der Ansprüche 4 und 5, wobei die Schicht aus borfreiem keramischem Material aus Siliciumcarbid (SiC) oder Siliciumnitrid (Si₃N₄) besteht.

7. Verfahren nach einem der Ansprüche 1 bis 6, wobei das Herstellen der verfestigten faserstoffhaltigen Vorform das Bilden der faserstoffhaltigen Vorform durch Formgeben der Faserstruktur und das Bilden der Interphasenbeschichtung auf den Fasern der Vorform durch chemische Infiltration in der Gasphase und anschließend das Bilden der ersten Matrixphase umfasst, wobei die Interphasenbeschichtung und die erste Matrixphase mit einer Gesamtdicke gebildet werden, die ausreicht, um die Vorform zu verfestigen.

8. Verfahren nach einem der Ansprüche 1 bis 6, wobei das Bilden der Interphase auf den Fasern der Vorform einen ersten Schritt des Bildens einer ersten Interphasenschicht und einen zweiten Schritt des Bildens einer zweiten Interphasenschicht umfasst, wobei der erste und der zweite Schritt durch einen Verfestigungsschritt der Vorform getrennt werden, wobei die Verfestigung der Vorform ein Imprägnieren mit einer flüssigen Zusammensetzung, die ein auf einer Kohlenstoffoder Keramikvorstufe basierendes Harz enthält, das Formgeben der Vorform in einem Werkzeug, die Polymerisation des Harzes und Umwandlung des Harzes in Kohlenstoff oder Keramik umfasst, wobei die Vorform zumindest bis zur Polymerisation des Harzes in dem Formgebungswerkzeug in Form gehalten wird.

9. Verfahren nach einem der Ansprüche 1 bis 8, wobei die faserstoffhaltige Vorform aus einer Faserstruktur gebildet wird, die in einem Stück durch dreidimensionales oder mehrschichtiges Weben hergestellt wird.

10. Verfahren nach einem der Ansprüche 1 bis 9, wobei die Dispersion von Kohlenstoff- und/oder Keramikpulver innerhalb der verfestigten faserstoffhaltigen Vorform durch Imprägnieren mit einer Aufschlämmung durchgeführt wird, die das in einem flüssigen Träger suspendierte Pulver enthält.

11. Verfahren nach einem der Ansprüche 1 bis 9, wobei die Dispersion von Kohlenstoff- und/oder Keramikpulver innerhalb der verfestigten faserstoffhaltigen Vorform mittels einer flüssigen Zusammensetzung durchgeführt wird, die das Kohlenstoff- und/oder Keramikpulver enthält, das in einem auf einer Kohlenstoff- oder Keramikvorstufe basierenden Harz dispergiert ist.

12. Verfahren nach einem der Ansprüche 1 bis 11, wobei die flüssige Zusammensetzung, die überwiegend aus Silicium gebildet wird, weiterhin mindestens ein Element aus Bor B, Titan-Ti und Molybdän-Mo umfasst.

## Claims

1. A method of fabricating a part out of composite material having a matrix that is at least partially made of ceramic, the method comprising the steps of:
• making a fiber structure, the fibers of the fiber structure being carbon or ceramic fibers;
• forming an interphase coating on the fibers, the coating being formed by at least one layer of pyrolytic carbon (PyC) or of boron-doped carbon (BC), the thickness of the interphase coating lying in the range 10 nm to 1000 nm ;
• shaping the fiber structure by means of shaping tooling in order to obtain a preform of the part that is to be fabricated;
• consolidating the fiber preform in the shaping tooling;
• forming a first matrix phase on the interphase, the first matrix phase comprising a plurality of layers of self-healing material alternating with one or more layers of material selected from pyrolytic carbon (PyC) and boron-doped carbon (BC), the layers of self-healing material and the layers of PyC or BC being obtained by CVI in order to obtain a partially densified consolidated preform; and
• after removing the preform from the shaping tooling, continuing densification by dispersing carbon powder and/or ceramic powder within the partially densified consolidated preform and by infiltrating molten silicon or a liquid composition formed for the most part of silicon.

2. A method according to claim 1, wherein the material of each layer of self-healing material in the first matrix phase is selected from an Si-B-C ternary system and boron carbide.

3. A method according to claim 1 or claim 2, wherein the total thickness of the layers of self-healing material plus the layer(s) of PyC or BC in the first matrix phase lies in the range 500 nm to 30 µm.

4. A method according to any one of claims 1 to 3, wherein the first matrix phase is finished off with at least one layer of ceramic material that does not contain boron, which layer is formed on the last layer of self-healing material.

5. A method according to claim 4, wherein said layer of ceramic material that does not contain boron has thickness of at least 500 nm.

6. A method according to claim 4 or claim 5, wherein said layer of ceramic material that does not contain boron is made of silicon carbide (SiC) or of silicon nitride (Si₃N₄).

7. A method according to any one of claims 1 to 6, wherein making the consolidated fiber preform comprises forming the fiber preform by shaping the fiber structure and forming the interphase coating on the fibers of the preform by chemical vapor infiltration, and then forming the first matrix phase, the interphase coating and the first matrix phase being formed to have a total thickness that is sufficient for consolidating the preform.

8. A method according to any one of claims 1 to 6, wherein forming the interphase on the fibers of the preform comprises a first step of forming a first interphase layer and a second step of forming a second interphase layer, the first and second steps being separated by a step of consolidating the preform, consolidation of the preform comprising impregnation with a liquid composition containing a carbon or ceramic precursor resin, shaping the preform in tooling, polymerizing the resin, and transforming the resin into carbon or ceramic, the preform being kept in shape in the shaping tooling at least until the resin has been polymerized.

9. A method according to any one of claims 1 to 8, wherein the fiber preform is formed from a fiber structure made as a single piece by three-dimensional or multilayer weaving.

10. A method according to any one of claims 1 to 9, wherein the carbon and/or ceramic powder is dispersed within the consolidated fiber preform by impregnation with a slip containing the powder in suspension in a liquid vehicle.

11. A method according to any one of claims 1 to 9, wherein the dispersion of carbon and/or ceramic powder within the consolidated fiber preform is performed by means of a liquid composition containing the carbon and/or ceramic powder dispersed in a carbon or ceramic precursor resin.

12. A method according to any one of claims 1 to 11, wherein the liquid composition formed for the most part of silicon also contains at least one element selected from boron B, titanium Ti, and molybdenum Mo.
